# EUROPEAN PATENT APPLICATION

(11) **EP 3 179 635 A1**
(43) Date of publication of application: **14.06.2017**
(21) Application number: 15830621.7
(22) Date of filing: 24.06.2015
(51) Int. Cl.: H04B 1/04

(54) **RADIO APPARATUS**

(30) Priority: 07.08.2014 JP 2014161117
(71) Applicant: Panasonic Intellectual Property Management Co., Ltd., Osaka-shi, Osaka 540-6207 (JP)
(72) Inventor: WATANABE, Takashi, Osaka 540-6207 (JP); YOSHIKAWA, Yoshishige, Osaka 540-6207 (JP); SATO, Kenji, Osaka 540-6207 (JP)
(74) Representative: Schwabe - Sandmair - Marx
(86) International application number: PCT/JP2015/003161
(87) International publication number: WO 2016/021105

(57) **Abstract**

A radio apparatus includes: antenna (151) that transmits and receives a radio signal; and matching unit (152) that has a function of matching and phase-adjusting between antenna (151) and transmission/reception circuit (154). In order to change a matching state of antenna (151), the radio apparatus includes level detector (158) that is provided in transmission/reception circuit (154) and is provided to detect a reception level of the radio signal received through changeover switch (156), matching adjuster (153), and antenna (151). Moreover, the radio apparatus is composed of determination unit (155) that switches changeover switch (156) of matching adjuster (153) in response to a level output from level detector (158). Thus, a radio apparatus, which provides optimum radio performance when the radio apparatus is installed and even after the radio apparatus is installed, can be provided.

## Description

### TECHNICAL FIELD

The present invention relates to a radio apparatus that optimally controls an antenna for an installation environment of the antenna and for a change in the installation environment.

### BACKGROUND ART

In general, an antenna in a radio apparatus is often affected by an ambient environment of the antenna. Therefore, the ambient environment sometimes greatly affects communication performance and fluctuations of a consumption current in the radio apparatus. Accordingly, heretofore, there has been disclosed a radio apparatus that adopts a mechanism of detecting a distance to a metal material that particularly affects an antenna of the radio apparatus and switches a matching circuit of the antenna in response to the detected distance (for example, refer to PTL 1). In this way, the influence from the ambient environment is absorbed.

Moreover, there have also been disclosed a method of detecting a reflected wave corresponding to the ambient environment by providing a block, which detects the reflected wave, separately from a transmission/reception circuit in the radio apparatus, and the like (for example, refer to PTL 2 and PTL 3).

However, in the conventional method of the radio apparatus, a device for detecting the ambient environment and a special device for detecting the reflected wave are required. Therefore, disadvantages are brought in terms of downsizing of the radio apparatus and in terms of cost.

Moreover, the device for detecting the ambient environment may not accurately detect the ambient environment depending on the arrangement of the device. In particular, in a case where the radio apparatus is a fixed station, once the radio apparatus is installed, a place where the radio apparatus is installed is not changed. That is, the radio apparatus is continuously affected by the ambient environment of the place where the radio apparatus is installed. Therefore, there have been large problems that there occur deterioration of a radio propagation distance of a system including the radio apparatus, robustness of communication, and cost efficiency due to a cover area, and the like.

Moreover, in a case of using a battery such as a primary battery for the radio apparatus, if a device dedicated for detecting the ambient environment and a block for detecting the reflected wave are added, the consumption current and the like are increased. As a result, a product life of the radio apparatus may be shortened.

### Citation List

### Patent Literature

PTL 1: Unexamined Japanese Patent Publication No. 2002-353850
PTL 2: Unexamined Japanese Patent Publication No. S61-206322
PTL 3: Unexamined Japanese Patent Publication No. 2007-096628

### SUMMARY OF THE INVENTION

A radio apparatus of the present invention includes a level detector, which detects a reception level of a radio signal, in a transmission/reception circuit. The level detector detects a reception level of a radio signal transmitted from an outside of the radio apparatus. Then, the radio apparatus has a configuration of adjusting a matching adjuster in response to the reception level of the radio signal by a changeover switch disposed after disposed on an antenna of the radio apparatus.

In this way, the antenna of the radio apparatus can be optimally controlled in matching with an installation environment. That is, the radio apparatus of the present invention detects the reception level of the radio signal transmitted from the outside, grasps the installation environment, and optimizes matching of the antenna. As a result, robust radio communication can be maintained while maintaining downsizing, cost reduction and suppression of a consumption current of the radio apparatus.

### BRIEF DESCRIPTION OF DRAWINGS

FIG. 1 is a diagram showing a radio system according to a first exemplary embodiment of the present invention.
FIG. 2 is a diagram showing a matching adjuster in a meter interface according to the exemplary embodiment.
FIG. 3 is a diagram showing characteristics of a plurality of matching parts according to the exemplary embodiment.
FIG. 4 is a diagram for describing a switching flow of a changeover switch according to the exemplary embodiment.
FIG. 5 is a block diagram showing an inside of a meter interface according to a second exemplary embodiment of the present invention.
FIG. 6 is a diagram for describing an entry flow at a time of installing the meter interface according to the second exemplary embodiment.
FIG. 7 is a diagram for describing a communication flow between a meter interface and a concentrator according to a third exemplary embodiment of the present invention.

### DESCRIPTION OF EMBODIMENTS

Hereinafter, exemplary embodiments of the present invention are described with reference to the drawings. Note that the present invention is not limited by the exemplary embodiments.

### FIRST EXEMPLARY EMBODIMENT

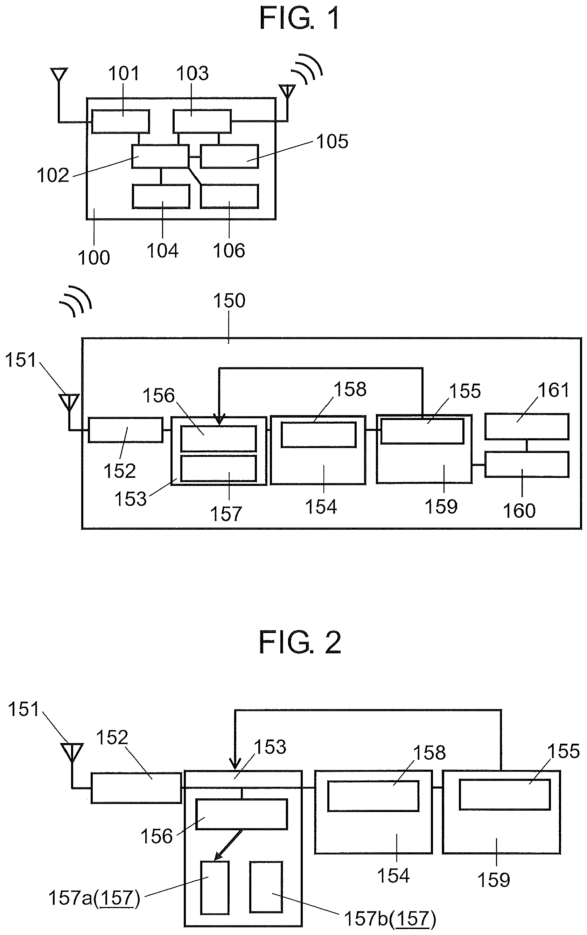

First, a description is given of a radio system according to a first exemplary embodiment of the present invention with reference to FIG. 1.

FIG. 1 is a diagram showing the radio system according to the first exemplary embodiment of the present invention.

As shown in FIG. 1, the radio system of this exemplary embodiment is composed of at least two types of radio apparatuses, which are concentrator 100 and meter interface 150.

Concentrator 100 includes at least long-distance radio unit 101, arithmetic operation unit 102, short-distance radio unit 103, reference clock generator 104, level arithmetic operation unit 105, installation information storage 106, and the like. Long-distance radio unit 101 is composed of a device that performs long-distance communication. Arithmetic operation unit 102 performs a control so that both of the radio units can communicate with each other in accordance with predetermined protocol or specification. Short-distance radio unit 103 communicates with meter interface 150 described later. Reference clock generator 104 generates reference timing for communicating with meter interface 150 in synchronization at a time of communicating with meter interface 150. Level arithmetic operation unit 105 calculates a signal level of a signal, which is transmitted from meter interface 150 and is received by short-distance radio unit 103.

Note that long-distance radio unit 101 in concentrator 100 is composed of a radio unit that conforms to a standard for use in a cellular phone and the like. The radio unit of long-distance radio unit 101 is composed, for example, in accordance with GSM (Global System for Mobile Communications) (registered trademark), GPRS (General Packet Radio Service), EDGE (Enhanced Data GSM Environment) or the like. Specifically, long-distance radio unit 101 is composed, for example, of an antenna, a low-noise amplifier, a wave detector, an oscillation circuit, a mixer, a phase locked loop, a frequency divider, a demodulation circuit, a modulation circuit, a power amplifier, a voltage control oscillation circuit, a processor having such functions as described above, and the like.

Then, long-distance radio unit 101 is connected to a managing server and the like through a public line or a network. At this time, the managing server monitors a state of concentrator 100 connected to the managing server, operates and manages concentrator 100, and so on.

A transmission output of short-distance radio unit 103 is equivalent to or smaller than a transmission output of long-distance radio unit 101. Therefore, short-distance radio unit 103 provides a communication portion that communicates with meter interface 150 connected to a lower side. Note that the lower side refers to communication from the short-distance radio unit to the meter interface, and an upper side refers to communication (from the concentrator to the server) using the long-distance radio unit in the concentrator.

Specifically, short-distance radio unit 103 is composed, for example, of an antenna, a low-noise amplifier, a wave detector, an oscillation circuit, a mixer, a phase locked loop, a frequency divider, a demodulation circuit, a modulation circuit, a power amplifier, a voltage control oscillation circuit, a processor having such functions as described above, and the like.

Level arithmetic operation unit 105 is composed, for example, of an analog-digital conversion circuit, a comparator, a wave detection circuit, a clock circuit, an arithmetic operation circuit, and the like. Then, level arithmetic operation unit 105 arithmetically operates (calculates), for example, a level of the signal from meter interface 150, the signal having been received by short-distance radio unit 103.

Installation information storage 106 is composed, for example, of a nonvolatile memory, a microcomputer, and the like. Then, installation information storage 106 stores installation information such as an installation height of concentrator 100 and an ambient condition or environment of concentrator 100.

Arithmetic operation unit 102 is composed, for example, of a microcomputer, a storage that stores data and a program, and the like. Then, arithmetic operation unit 102 controls the state of concentrator 100 in response to a command from the upper side (management server or the like), the command having been received by long-distance radio unit 101 of concentrator 100. Moreover, arithmetic operation unit 102 acquires information of meter 161 through antenna 151 and transmission/reception circuit 154 of meter interface 150 on the lower side.

Furthermore, meter interface 150 shown in FIG. 1 is composed of at least antenna 151, matching unit 152, matching adjuster 153, transmission/reception circuit 154, arithmetic operation unit 159, counter interface 160, meter 161, and the like. Antenna 151 transmits and receives a radio signal such as a radio wave at a time of communicating with concentrator 100. Matching unit 152 matches antenna 151 and transmission/reception circuit 154 with each other. Matching adjuster 153 is composed of changeover switch 156 and plural matching parts 157. Transmission/reception circuit 154 includes level detector 158 that detects a strength of a radio signal transmitted from concentrator 100. Arithmetic operation unit 159 includes determination unit 155, and determination unit 155 makes a determination for switching changeover switch 156 in response to a level of the radio signal detected by a level detector.

Note that antenna 151 is completely built in meter interface 150 in some cases, and is retracted as an external antenna from a cabinet of meter interface 150 in other cases. However, it is not necessary to particularly define a state of antenna 151.

Matching unit 152 is composed, for example, of an inductor, a capacitor element, and the like. Then, matching unit 152 provides a circuit that performs impedance matching and phase conversion for antenna 151 and transmission/reception circuit 154.

Transmission/reception circuit 154 provides a block that communicates with other short-distance radio apparatuses including concentrator 100. Specifically, transmission/reception circuit 154 is composed, for example, of a low-noise amplifier, a wave detector, an oscillation circuit, a mixer, a phase locked loop, a frequency divider, a modulation circuit, a power amplifier, a voltage control oscillation circuit, a processor having such functions as described above, and the like.

Moreover, transmission/reception circuit 154 includes level detector 158 in the inside of transmission/reception circuit 154. Level detector 158 has a function of converting a signal, which is input from antenna 151, into a received signal strength level. Level detector 158 is composed, for example, of an analog-digital conversion circuit, a wave detection circuit, an amplifier, and the like.

Arithmetic operation unit 159 is composed, for example, of a microcomputer, a storage that stores data and a program, and the like, and includes determination unit 155 in the inside of arithmetic operation unit 159. Determination unit 155 performs a control to switch changeover switch 156 in response to a signal level output from level detector 158 of transmission/reception circuit 154. At this time, in response to the signal level output from level detector 158, determination unit 155 performs a switching control so that a signal received by transmission/reception circuit 154 becomes large. Note that a state where the signal level becomes large means that the impedance matching between antenna 151 and transmission/reception circuit 154 is selected to be optimized.

Matching adjuster 153 is composed of changeover switch 156 and plural matching parts 157. Changeover switch 156 is composed, for example, of a compound semiconductor or a semiconductor such as CMOS. Plural matching parts 157 are composed, for example, of capacitor components such as plural capacitors (capacitor elements).

Counter interface 160 has a function of detecting a motion of a counter in meter 161. Specifically, directly or after being subjected to signal processing, the motion of the counter is input to counter interface 160 from, for example, a reed switch (ON/OFF state), a coil (a voltage following a variation of an inductor value), an electrostatic sensor (a voltage value following a capacity variation), an ultrasonic sensor (a transmission/reception time of an ultrasonic wave), a heat detection sensor (a voltage value following a temperature change) and the like. Then, the motion of the counter, which is detected by counter interface 160, is input to arithmetic operation unit 159. Arithmetic operation unit 159 records the motion of the counter, for example, as a flow rate, an accumulated flow rate, or the like.

Meter 161 manages a consumption, flow rate and the like of energy, for example, in a gas meter, a water meter, a wattmeter, an ammeter, a pressure gage, a flowmeter, a calorimeter, or the like. Though FIG. 1 shows a configuration where meter 161 is built in the same cabinet as meter interface 150, meter 161 and meter interface 150 may be configured in separate cabinets.

As described above, the radio system including the radio apparatus of this exemplary embodiment is constructed.

Next, a description is made of a configuration of matching adjuster 153 in meter interface 150 with reference to FIG. 2.

FIG. 2 is a diagram showing the matching adjuster in the meter interface according to this exemplary embodiment.

As shown in FIG. 2, matching adjuster 153 is composed of changeover switch 156, plural matching parts 157, and the like. Changeover switch 156 is composed, for example, of a 1-input/2-output switch (Single Pole Double Throw). Then, changeover switch 156 is connected to plural matching parts 157 so as to be capable of switching between, for example, two types of matching part 157a and matching part 157b, which compose plural matching parts 157.

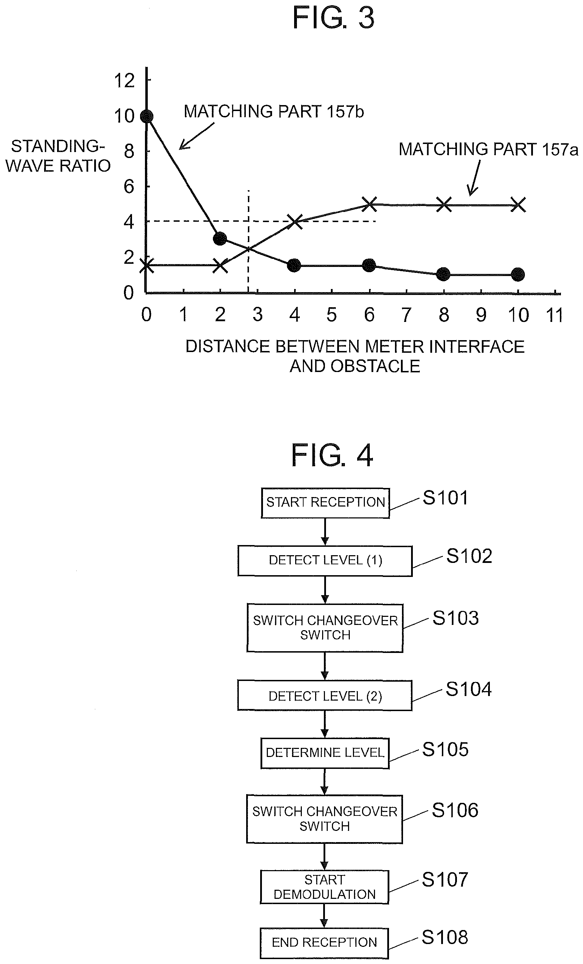

Note that, as described below with reference to FIG. 3, two types of matching part 157a and matching part 157b are composed of matching parts of which standing-wave ratios are changed in response to meter interface 150 and an ambient environment (for example, a distance to an obstacle) of meter interface 150. In this exemplary embodiment, matching part 157a and matching part 157b are composed of only the capacitor elements so as to be easily switchable. Therefore, phase conversion is performed through a phase conversion circuit of matching unit 152.

Next, with reference to FIG. 3, a description is made of a part configuration and a method of setting a matching constant for the above-mentioned two types of matching part 157a and matching part 157b.

FIG. 3 is a diagram showing characteristics of the plurality of matching parts according to this exemplary embodiment.

In usual, in meter interface 150, an optimum matching constant between antenna 151 and transmission/reception circuit 154 differs depending on the distance to an external obstacle. Accordingly, in this exemplary embodiment, the part configuration and constant of matching part 157a and matching part 157b are determined so that the standing-wave ratio on the antenna 151 side becomes a predetermined value or less even if the distance to the obstacle is changed. Specifically, as shown in FIG. 3, the part configuration and the matching constant are set so that the standing-wave ratio becomes 4 or less if the switching is made between matching part 157a and matching part 157b at a boundary, where the distance to the obstacle is 2.8, even in a case where the distance between meter interface 150 and the external obstacle is changed. Note that, in a case where such a target standing-wave ratio cannot be obtained by the switching between the two matching parts, other plural matching parts (not shown) other than matching part 157a and matching part 157b may be provided as plural matching parts 157.

Next, a description is made below of a switching procedure of changeover switch 156 of matching adjuster 153 with reference to FIG. 4.

FIG. 4 is a diagram for describing a switching flow of a changeover switch according to this exemplary embodiment. That is, FIG. 4 shows a switching flow of changeover switch 156 of matching adjuster 153 in meter interface 150. Moreover, FIG. 4 shows an example of a flow in a case where meter interface 150 receives a telegram from another radio apparatus including concentrator 100. Here, the flow of FIG. 4 is described on an assumption that, in accordance with predetermined protocol, changeover switch 156 is switched in each radio communication, and each communication is made by a telegram in which a time for comparing a reception level of a radio signal such as a radio wave is ensured.

As shown in FIG. 4, first, meter interface 150 activates transmission/reception circuit 154. In this way, meter interface 150 starts to receive the telegram in accordance with the predetermined protocol (Step S101). At this time, changeover switch 156 is set so as to be connected to a predetermined matching part (matching part 157a in this exemplary embodiment).

Next, the telegram received through predetermined matching part 157a is input to level detector 158 of transmission/reception circuit 154, is converted into a received signal strength level (RSSI (Received Signal Strength Indicator)) by level detector 158, and is then output. Then, the converted received signal strength level is stored in arithmetic operation unit 159 (Step S102). Note that the received signal strength level output from level detector 158 may be simply referred to as a level.

Next, changeover switch 156 is switched at a predetermined timing in accordance with the predetermined protocol (Step S103). At this time, changeover switch 156 is switched so as to be connected to a matching part (matching part 157b in this exemplary embodiment) different from that in Step S102.

Next, similarly to Step S102, the telegram received through predetermined matching part 157b is input to level detector 158 of transmission/reception circuit 154, is converted into a received signal strength level by level detector 158, and is then output. Then, the converted received signal strength level is stored in arithmetic operation unit 159 (Step S104).

Next, the received signal strength levels stored in arithmetic operation unit 159 in Steps S102 and S104 are compared with each other, and it is determined which of the received signal strength levels is larger (Step S105). Then, changeover switch 156 is controlled to be switched to the matching part side where the received signal strength level is larger (Step S106).

Subsequently, a demodulation operation of the telegram is started through transmission/reception circuit 154 and arithmetic operation unit 159 (Step S107).

When the demodulation operation is ended, the reception of the telegram is ended (Step S108).

As described above, the switching procedure of changeover switch 156 of matching adjuster 153 is executed.

That is, in this exemplary embodiment, in a case where meter interface 150 communicates with other radio apparatuses including concentrator 100, a time and timing when meter interface 150 switches changeover switch 156 are incorporated in communication protocol. In this way, in an environment where meter interface 150 is installed, the telegram can be received under optimum antenna matching. As a result, an increase of a consumption current owing to a decrease of a communication distance, an increase of the number of times of re-transmission and antenna mismatching can be suppressed, and robustness of the communication can be ensured.

Moreover, in this exemplary embodiment, plural matching parts 157 are switched in accordance with the determination from the received signal strength level converted by level detector 158 in transmission/reception circuit 154. In this way, the optimum part configuration and matching constant are determined from plural matching parts 157 depending on meter interface 150 and the obstacle located outside. Therefore, antenna 151 of meter interface 150 can be optimized without providing a particular circuit separately.

Moreover, in this exemplary embodiment, meter interface 150 becomes less likely to be affected by the ambient environment, and accordingly, installation conditions of meter interface 150 can be made uniform. In this way, it becomes possible for anyone to install meter interface 150, and accordingly, installation cost can be reduced.

Note that, the configuration of directly making communication between concentrator 100 and meter interface 150 has been described as an example in the exemplary embodiment described above, but the configuration is not limited thereto. For example, there may be adopted a configuration in which a repeater playing a role of a relay is interposed, or a configuration including a multi-hopping terminal, and similar advantageous effects are obtained.

### SECOND EXEMPLARY EMBODIMENT

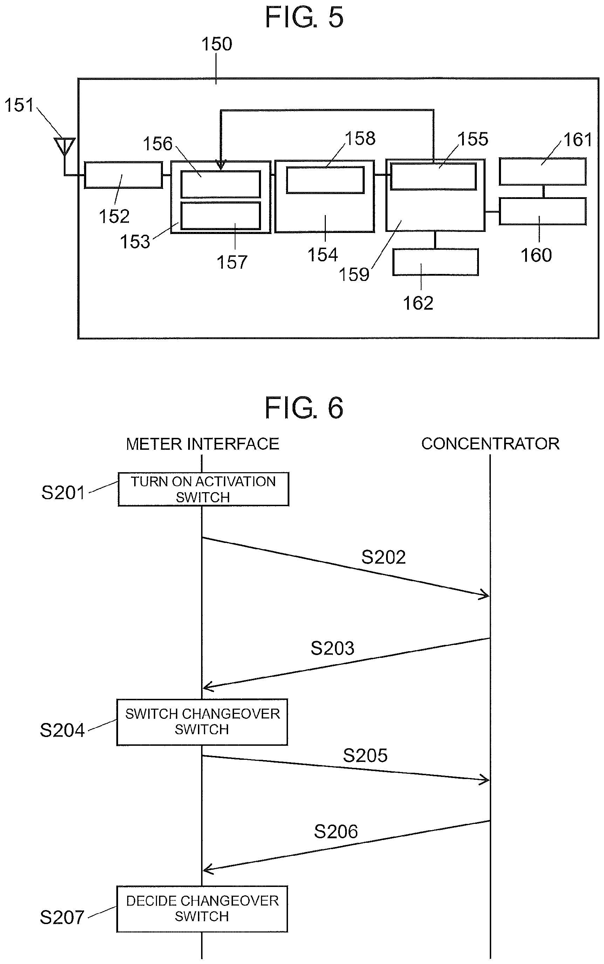

Hereinafter, a configuration of a radio apparatus according to a second exemplary embodiment of the present invention is described with reference to FIG. 5. Specifically, another switching method of changeover switch 156 in meter interface 150 is described.

FIG. 5 is a block diagram of a meter interface according to the second exemplary embodiment of the present invention.

Hereinafter, portions different from those of the meter interface according to the first exemplary embodiment are described in detail.

As shown in FIG. 5, meter interface 150 of this exemplary embodiment further includes an activation switch, which is different from that of the first exemplary embodiment. Other configurations and operations are similar to those of the first exemplary embodiment, and accordingly, a description thereof is omitted.

That is, activation switch 162 of this exemplary embodiment provides a switch operated at a time of activating meter interface 150. Activation switch 162 is composed, for example, of a tactile switch, a slide switch, a reed switch capable of being activated by a magnet, or the like.

Here, meter interface 150 is driven by a primary battery such as a lithium battery. Therefore, activation switch 162 is set to be activated after meter interface 150 is installed, whereby operations of meter interface 150 are started. In this way, power consumption is suppressed, and a life of the radio apparatus is prolonged.

Next, the operations of meter interface 150 of the radio apparatus according to this exemplary embodiment are described with reference to FIG. 6.

FIG. 6 is a diagram for describing an entry flow at a time of installing the meter interface in this exemplary embodiment.

As shown in FIG. 6, first, when meter interface 150 is activated by activation switch 162, arithmetic operation unit 159 of determination unit 155 is activated. In this way, transmission/reception circuit 154 is activated in order to enter a network that composes the radio system (Step S201).

Next, arithmetic operation unit 159 generates a first entry telegram generated in accordance with the predetermined protocol. Then, arithmetic operation unit 159 transmits the generated first entry telegram toward concentrator 100 through transmission/reception circuit 154 and antenna 151. At this time, changeover switch 156 of matching adjuster 153 is set to be connected to a capacitor element that composes a predetermined matching part (Step S202).

Next, upon receiving the transmitted first entry telegram, concentrator 100 generates a first response telegram to the first entry telegram by arithmetic operation unit 102. Then, concentrator 100 transmits the generated first response telegram to meter interface 150 (Step S203).

Next, meter interface 150 receives the transmitted first response telegram by transmission/reception circuit 154. Then, level detector 158 converts the first response telegram into a received signal strength level, which is then stored in arithmetic operation unit 159.

Moreover, after receiving the first response telegram, meter interface 150 connects changeover switch 156 to a capacitor element of a matching part different from that in Step S202 (Step S204).

Next, meter interface 150 generates a second entry telegram by arithmetic operation unit 159. Then, meter interface 150 transmits the generated second entry telegram to concentrator 100 through transmission/reception circuit 154 and antenna 151 (Step S205).

Next, upon receiving the transmitted second entry telegram, concentrator 100 transmits, to meter interface 150, a second response telegram to the second entry telegram (Step S206).

Next, meter interface 150 receives the transmitted second response telegram by transmission/reception circuit 154. Then, level detector 158 converts the second response telegram into a received signal strength level, which is then stored in arithmetic operation unit 159.

Next, the received signal strength levels stored in arithmetic operation unit 159 in Steps S204 and S206 are compared with each other, and it is determined which of the received signal strength levels is larger. Then, changeover switch 156 is switched and set to the matching part side where the received signal strength level is larger (Step S207).

After Step S207, operations similar to those of the first exemplary embodiment are executed.

As described above, the switching procedure of changeover switch 156 according to this exemplary embodiment is executed.

That is, in this exemplary embodiment, in a case where the meter interface is installed, and is subjected to network connection to another radio apparatus such as the concentrator, the matching part is switched, and the received signal strength level is detected plural times. Then, the matching part in which the received signal strength level is larger is set. In this way, robust communication can be made without being affected by the installation environment of the meter interface. That is, the meter interface can be installed in accordance with a uniform rule. As a result, installation work of the meter interface can be simplified.

The above-mentioned method of receiving the received signal strength level plural times depends on protocol in general. Therefore, the switching method mentioned above is merely an example. For example, in a case where a host terminal is a network of periodically transmitting a beacon, the procedure shifts to a continuous reception operation of the beacon after the meter interface is activated by the activation switch. At this time, plural beacons are received from the plural matching circuits while switching the matching constant. Then, a configuration may be adopted, in which such received signal strength levels received by the level detector of the transmission/reception circuit are compared with one another, and the matching circuit in which the reception level is largest is selected.

Moreover, in a radio network system including relays, a configuration may be adopted, in which the above-described determination is made by using not only the received signal strength levels but also the number of relay stages. In this case, if the received signal strength levels are a threshold value or more, then the determination is made by putting priority not to the received signal strength levels but to information regarding the number of relay stages, and for example, a route where the number of relay stages is minimum is determined. Meanwhile, in a case where the received signal strength levels are the threshold value or less, the received signal strength levels are given priority to make a control. In this way, the current consumption can be reduced while high communication responsiveness is maintained.

### THIRD EXEMPLARY EMBODIMENT

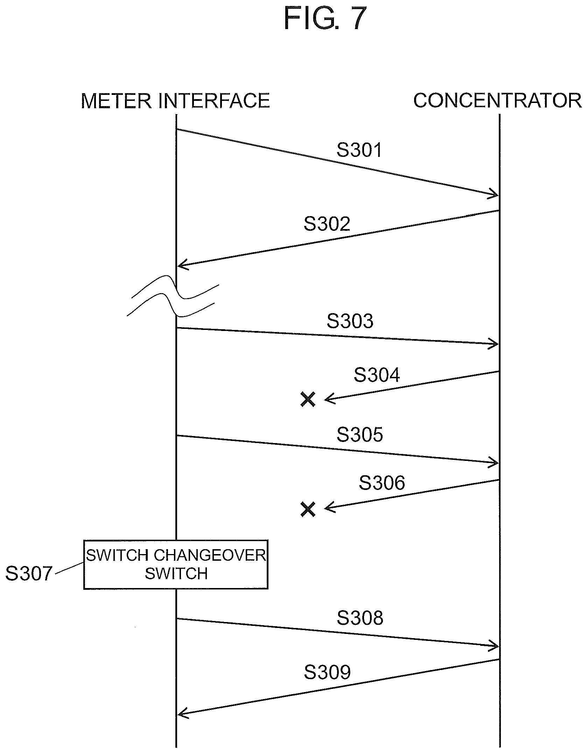

Hereinafter, a description is given of a configuration of a radio apparatus according to a third exemplary embodiment of the present invention with reference to FIG. 7. Specifically, a method of switching changeover switch 156 in the meter interface is described.

FIG. 7 is a diagram for describing a communication flow between a meter interface and a concentrator in the third exemplary embodiment of the present invention.

Hereinafter, only portions different from those of the first and second exemplary embodiments are described in detail.

As shown in FIG. 7, in this exemplary embodiment, a processing operation is provided in a case where abnormality occurs in communication between the meter interface and the concentrator, which is different from the first and second exemplary embodiments. Other configurations and operations are similar to those of the first and second exemplary embodiments, and accordingly, a description thereof is omitted.

Specifically, as shown in FIG. 7, this exemplary embodiment is adapted to a time of communication periodically performed between meter interface 150 and concentrator 100 and a time of inappropriate communication in a case where abnormality occurs in meter 161 or meter interface 150. Note that such periodic communication is communication, for example, in which a meter reading value acquired from meter 161 is uploaded to concentrator 100 and the server. Further, the abnormality of meter 161 or meter interface 150 is, for example, an alarm about a battery voltage reduction, a hardware error, an unauthorized use, or the like.

Hereinafter, a description is given of a communication operation between the meter interface and concentrator of the radio apparatus according to this exemplary embodiment with reference to FIG. 7. As shown in FIG. 7, first, meter interface 150 generates a telegram by arithmetic operation unit 159 in accordance with the predetermined protocol. Then, meter interface 150 transmits the generated telegram through transmission/reception circuit 154 and antenna 151 (Step S301).

Next, when concentrator 100 receives the transmitted telegram, concentrator 100 transmits a response telegram or an ACK signal to meter interface 150 (Step S302).

At this time, when the communication in Steps S301 and S302 is established, meter interface 150 can determine that the communication has been successful.

Hereinafter, a control flow in a case where the communication between meter interface 150 and concentrator 100 is suspended is described.

First, similarly to the above, a telegram is transmitted from meter interface 150 to concentrator 100 (Step S303). At this time, in a case where a response telegram to the transmitted telegram, the response telegram being transmitted from concentrator 100, does not reach meter interface 150 (Step S304), meter interface 150 re-transmits the telegram a predetermined number of times after elapse of a predetermined time (Step S305).

Then, in a case where meter interface 150 cannot receive the response telegram from concentrator 100 even if meter interface 150 re-transmits the telegram, meter interface 150 switches changeover switch 156 in matching adjuster 153. At this time, changeover switch 156 is controlled to be switched so as to be connected to another matching part, other than the matching part to which changeover switch 156 is connected in Step S303 to Step S305 (Step S307).

Next, meter interface 150 transmits the generated telegram to concentrator 100 again (Step S308).

In this way, a possibility arises that the communication between meter interface 150 and concentrator 100 may be established (Step S309).

That is, as in this exemplary embodiment, plural matching parts 157 of meter interface 150 are changed as appropriate, whereby a communication condition with a concentrator that does not exist can be changed. Therefore, measures can be taken against a case where an environment condition is changed and the communication cannot be carried out after the meter interface is installed. In this way, it is not necessary to change the robustness of the communication, an installation position of the meter interface, and the like. As a result, maintenance easiness can be enhanced, and running cost of the network can be reduced.

Moreover, in this exemplary embodiment, the received signal strength level can be acquired periodically, and can be compared with the received signal strength level acquired at the installation time or the previous communication. That is, in a case where the received signal strength level is greatly deteriorated, changeover switch 156 is switched, and the comparison between the received signal strength levels is made by determination unit 155, whereby a setting change is made to the optimum matching part. In this way, the robustness of the communication can be enhanced. Further, even in comparison with a method of obtaining diversity by using plural antennas, the radio apparatus becomes superior in terms of cost of parts and miniaturization.

As described above, the radio apparatus of the present invention includes: an antenna that transmits and receives a radio signal; a transmission/reception circuit; and a matching unit that has a matching/phase adjusting function between the antenna and the transmission/reception circuit. In order to change a matching state of the antenna, the radio apparatus includes: a matching adjuster composed of a changeover switch and plural matching parts; and a level detector that detects a reception level of the radio signal received through the antenna. Moreover, the radio apparatus may include a determination unit that switches a changeover switch of the matching adjuster in response to a level output from the level detector.

Accordingly, the robustness of communication can be ensured by suppressing the influence of the installation environment of the radio apparatus, and in addition, the consumption current can be suppressed.

Moreover, in the radio apparatus of the present invention, the matching unit may be composed of only a capacitor element and an inductor, and in the matching adjuster, the plural matching parts may be composed of only capacitor elements.

In this way, the radio apparatus can be downsized, and cost of the radio apparatus can be suppressed. Further, the robustness of the radio communication can also be ensured.

Furthermore, the determination unit of the radio apparatus of the present invention may perform a control to switch the changeover switch in the matching adjuster, and to select a switching state in which a reception level output from the level detector is high.

In this way, the robustness of the communication can be ensured by suppressing the influence of the installation environment of the radio apparatus, and in addition, the consumption current can be suppressed.

Moreover, the determination unit of the radio apparatus of the present invention may be configured, in the case where the radio apparatus is installed, to switch the changeover switch in the matching adjuster at least once or more, to select the switching state in which the reception level output from the level detector is high, and to make communication that follows.

In this way, the robustness of the communication can be ensured by suppressing the influence of the installation environment of the radio apparatus, and in addition, the consumption current can be suppressed.

Moreover, the determination unit of the radio apparatus of the present invention may be configured to switch the changeover switch in the matching adjuster and retry the communication in the case where it becomes impossible to make communication with another radio apparatus after communicating with the other radio apparatus.

In this way, even if the ambient environment is changed after the radio apparatus is installed, the antenna performance of the radio apparatus can be optimized. As a result, the robustness of the communication can be ensured, and in addition, the consumption current can be suppressed.

Moreover, the radio apparatus of the present invention may further include an activation switch, and the determination unit may perform the switching operation for the changeover switch of the matching adjuster after the activation switch is activated. In this way, the consumption power is reduced, and the life of the radio apparatus is prolonged.

### INDUSTRIAL APPLICABILITY

The radio apparatus of the present invention can be installed in a state where the performance of the antenna is optimum when the radio apparatus is installed. Therefore, the present invention is useful for a radio apparatus to be used stationarily.

### REFERENCE MARKS IN THE DRAWINGS

- 100: concentrator
- 101: long-distance radio unit
- 102, 159: arithmetic operation unit
- 103: short-distance radio unit
- 104: reference clock generator
- 105: level arithmetic operation unit
- 106: installation information storage
- 150: meter interface
- 151: antenna
- 152: matching unit
- 153: matching adjuster
- 154: transmission/reception circuit
- 155: determination unit
- 156: changeover switch
- 157: plural matching parts
- 157a, 157b: matching part
- 158: level detector
- 160: counter interface
- 161: meter
- 162: activation switch

## Claims

1. A radio apparatus comprising:
an antenna that transmits and receives a radio signal;
a transmission/reception circuit;
a matching unit that has a function of matching and phase-adjusting between the antenna and the transmission/reception circuit;
a matching adjuster that includes a changeover switch and plural matching parts in order to change a matching state of the antenna;
a level detector that detects a reception level of the radio signal received through the antenna; and
a determination unit that switches the changeover switch of the matching adjuster in response to a level output from the level detector.

2. The radio apparatus according to claim 1, wherein
the matching unit includes only a capacitor element and an inductor, and
the plural matching parts in the matching adjuster include only capacitor elements.

3. The radio apparatus according to claim 1, wherein
the determination unit switches the changeover switch in the matching adjuster, and performs a control to select a switching state where the reception level output from the level detector is high.

4. The radio apparatus according to claim 1, wherein
in a case where the radio apparatus is installed, the determination unit switches the changeover switch in the matching adjuster at least once or more, selects a switching state where the reception level output from the level detector is high, and makes communication that follows.

5. The radio apparatus according to claim 1, wherein
in a case where it becomes impossible to make communication with another radio apparatus after communicating with the other radio apparatus, the determination unit switches the changeover switch in the matching adjuster to retry the communication.

6. The radio apparatus according to claim 1, further comprising an activation switch, wherein
the determination unit performs a switching operation for the changeover switch of the matching adjuster after the activation switch is activated.
